# NEUE EUROPÄISCHE PATENTSCHRIFT

(11) **EP 1 748 908 B2**
(45) Veröffentlichungstag und Bekanntmachung des Hinweises auf die Entscheidung über den Einspruch: **05.03.2014**
(45) Hinweis auf die Patenterteilung: 21.07.2010
(21) Anmeldenummer: 05754407.4
(22) Anmeldetag: 20.05.2005
(51) Int. Cl.: B60H 3/00, F24F 3/16, A61L 9/015

(54) **VORRICHTUNG ZUR DESINFEKTION EINER KRAFTFAHRZEUGKLIMAANLAGE**
DEVICE FOR DISINFECTION OF A VEHICLE AIR-CONDITIONING UNIT
DISPOSITIF DE DESINFECTION D'UNE CLIMATISATION DE VEHICULE AUTOMOBILE

(30) Priorität: 25.05.2004 DE 102004025461; 26.06.2004 DE 102004030998
(43) Veröffentlichungstag der Anmeldung: 07.02.2007
(73) Patentinhaber: Bayerische Motoren Werke Aktiengesellschaft, 80809 München (DE)
(72) Erfinder: WIEDEMANN, Stefan, 80796 München (DE); SCHLENZ, Dieter, 82288 Kottgeisering (DE)
(74) Vertreter: Wesel-Mair, Julia
(86) Internationale Anmeldenummer: PCT/EP2005/005515
(87) Internationale Veröffentlichungsnummer: WO 2005/115779

(56) Entgegenhaltungen:
- WO-A-03/080375
- DE-A1- 19 606 412
- JP-A- 8 258 562
- US-A- 5 899 082

## Beschreibung

Die Erfindung bezieht sich auf eine Vorrichtung zur Desinfektion der Bauteile, insbesondere des Verdampfers, einer Klimaanlage in Kraftfahrzeugen nach dem Oberbegriff des Patentanspruchs 1.

Eine derartige Vorrichtung ist beispielsweise aus der WO 03/080375 A1 bekannt, bei der ein Entkeimungsmodus mit hoher Ozonkonzentration und ein Reinigungsmodus mit niedriger Ozonkonzentration vorgesehen ist.

Eine weitere Vorrichtung ist beispielsweise im Zusammenhang mit dem in der DE 196 51 403 A1 beschriebenen System zur Atemluftreinigung bekannt. Dieses bekannte System beschäftigt sich jedoch vorrangig mit der Reinigung der Atemluft im Fahrgastinnenraum im Fahrbetrieb eines Kraftfahrzeuges.

Problematisch dabei ist die richtige Zumessung der lonenmenge bzw. Ozonmenge. Ist die lonenmenge bzw. Ozonmenge zu klein, ist die Wirkung der Vorrichtung unzureichend. Ist die lonenmenge bzw. Ozonmenge zu groß, kann dies für die Insassen belästigend wirken.

Zum weiteren technischen Hintergrund wird auf die US 5,899,082 hingewiesen.

Weiterhin ist aus der JP 8258562 A eine Vorrichtung zur Desinfektion eines Verdampfers bekannt, die einen Ozongenerator aktiviert, wenn sich kein Insasse in der Fahrzeugkabine aufhält.

Es ist daher Aufgabe der Erfindung, einerseits eine sichere Desinfektion sicherzustellen und andererseits das Wohlbefinden der Insassen nicht zu beeinträchtigen.

Diese Aufgabe wird durch die Merkmale des Patentanspruchs 1 gelöst. Vorteilhafte Weiterbildungen sind die Gegenstände der abhängigen Ansprüche.

Im folgenden wird nur von Ozon statt von Ionen gesprochen. Ozon wird durch dielektrisch-behinderte Entladung erzeugt. Je nach Höhe der anliegenden Spannung werden zuerst Ionen, dann bei höherer Spannung durch elektrische Gasentladung, Ozon erzeugt. Hier wird davon ausgegangen, dass nur das Ozon zur tatsächlichen Desinfektion der Klimaanlagenbauteile, insbesondere des Verdampfers, führt. Die Desinfektion wird dadurch erreicht, dass das erzeugte Ozon sich im Kondenswasser (z. B. auf dem Verdampfer) löst und Hydroxid-Radikale bildet, die Keime, Pilze und Bakterien abtöten.

Die erfindungsgemäße Vorrichtung zur Desinfektion der Bauteile, insbesondere des Verdampfers, einer Klimaanlage in Kraftfahrzeugen weist einen Ozonerzeuger auf, der in der Klimaanlage möglichst in der Nähe des Verdampfers angeordnet ist und der mittels einer elektronischen Steuereinheit, die beispielsweise im Ozonerzeuger oder auch im ohnehin vorhandenen Klimasteuergerät integriert sein kann, ansteuerbar ist. Die Steuereinheit ist derart ausgestaltet, dass der Ozonerzeuger im Sinne der Produktion einer vergleichsweise hohen Ozonmenge einschaltbar ist, wenn aufgrund entsprechender der Steuereinheit zur Verfügung gestellter Informationen (z. B. über Sensoren oder über Datenbus) auf das Vorliegen einer Bedingung geschlossen werden kann, bei der die Luftklappen zwischen Klimaanlage und Fahrgastinnenraum voraussichtlich für eine längere Zeit, d. h. für eine zur Desinfektion notwendige Zeit, geschlossen bleiben oder geschlossen werden können, damit kein Ozon in den Fahrgastinnenraum gelangt.

Eine vergleichsweise hohe Ozonmenge ist eine Ozonmenge, die eine sichere Desinfektion in begrenzter Zeit gewährleistet. Im Unterschied hierzu ist unter einer vergleichsweise niedrigen Ozonmenge eine Ozonmenge zu verstehen, die eine Einhaltung von maximal zulässigen Grenzwerten zum Insassenschutz sicherstellt. Vorzugsweise werden bereits vor der Produktion der vergleichsweise hohen Ozonmenge - wenn nicht bereits geschehen - die Luftklappen, insbesondere die Luftverteilungsklappen und vorzugsweise auch die Umluftklappe, durch die Steuereinheit geschlossen.

Eine Bedingung, bei der die Luftklappen zwischen Klimaanlage und Fahrgastinnenraum voraussichtlich für eine längere Zeit geschlossen bleiben können, ist das Vorliegen eines zumindest wahrscheinlich unbesetzten Zustandes des Fahrgastraumes. Dabei ist die Steuereinheit derart ausgestaltet, dass es einen unbesetzten Zustand des Fahrgastraumes erkennt. Hierzu erhält die Steuereinheit beispielsweise mittels entsprechender Sensoren oder mittels Datenbusverbindungen zu anderen elektronischen Steuergeräten entsprechende Informationen als Eingangssignale. Die Eingangssignale werden in einer entsprechenden Auswerteeinheit in der Steuereinheit verarbeitet. Ergebnis dieser Verarbeitung ist eine entsprechende Ansteuerung des Ozonerzeugers. Dazu weist die Steuereinheit beispielsweise eine Endstufe zur Ansteuerung eines im Ozonerzeuger enthaltenen elektrischen Aktuators auf. Ist die Steuereinheit nicht im Ozonerzeuger integriert und weist der Ozonerzeuger selbst eine eigene Elektronik auf, können die Informationen auch an die Elektronik des Ozonerzeugers übertragen werden, die selbst entscheidet, ob die Einschaltbedingung vorliegt.

Beispielsweise kann die Steuereinheit auf einen zumindest wahrscheinlich unbesetzten Zustand des Fahrgastraumes schließen, wenn die Brennkraftmaschine (bzw. die Zündung, sogenannte Klemme 15) oder die Radioklemme (sogenannte Klemme R) ausgeschaltet ist. Diese Informationen erhält die Steuereinheit beispielsweise über eine Datenbusverbindung vom elektronischen Brennkraftmaschinensteuergerät.

Zusätzlich oder alternativ kann das Klimasteuergerät auf einen zumindest wahrscheinlich unbesetzten Zustand des Fahrgastraumes schließen, wenn die Zentralverriegelung aktiviert ist. Diese Informationen erhält die Steuereinheit beispielsweise über eine Datenbusverbindung vom elektronischen Zentralverriegelungssteuergerät

Weiterhin kann die Steuereinheit zusätzlich oder alternativ auf einen zumindest wahrscheinlich unbesetzten Zustand des Fahrgastraumes schließen, wenn eine Sitzbelegungserkennungseinrichtung (z. B. mittels Videoüberwachung im Fahrgastinnenraum, oder dem Bewegungsmelder der Diebstahlwarnanlage oder mittels Drucksensoren in den Sitzen, insbesondere mittels einer Sensorik, die für eine Airbagauslösung ohnehin vorgesehen ist) keinen Insassen erkennt. Hierzu ist die Steuereinheit beispielsweise über einen Datenbus mit der Sitzbelegungseinrichtung bzw. mit einem Steuergerät (z. B. Airbagsteuergerät), in der eine Sitzbelegungserkennungseinrichtung integriert ist, verbunden.

Eine weitere Bedingung, bei der die Luftklappen zwischen Klimaanlage und Fahrgastinnenraum voraussichtlich für eine längere Zeit geschlossen bleiben können, ist vorzugsweise der abgeschaltete Zustand der Standlüft-, Standheiz-, Standklima- und der Restwärmefunktion bei abgeschalteter Brennkraftmaschine.

Eine weitere Bedingung, bei der die Luftklappen zwischen Klimaanlage und Fahrgastinnenraum voraussichtlich für eine längere Zeit geschlossen bleiben können, ist vorzugsweise die Information für den Betrieb des Bordnetzes, dass elektrische Standverbraucher aktiviert werden können.

Eine weitere Bedingung, bei der die Luftklappen zwischen Klimaanlage und Fahrgastinnenraum voraussichtlich für eine längere Zeit geschlossen bleiben können, ist vorzugsweise die Information, dass die aktuelle Uhrzeit zwischen 1 und 6 Uhr ist.

Die Steuereinheit veranlasst die Produktion einer vergleichsweise hohen Ozonmenge bei geschlossenen Luftklappen für eine vorgegebene erste Zeitspanne, die für eine sichere Desinfektion, z. B. abhängig von einer geschätzten Kondenswassermenge, notwendig ist. Beispielsweise wird diese Zeitspanne empirisch ermittelt und in der Steuereinheit abgespeichert oder von der Steuereinheit abhängig von abgespeicherten oder abfragbaren Zusatzdaten, wie z. B. Verdampfertyp-Code, Kompressorstatus und/oder Luftfeuchtigkeit, ermittelt.

Die Steuereinheit bestimmt gemäß der Erfindung nach Ablauf der vorgegebenen ersten Zeitspanne eine für den Abbau des Ozons erforderliche zweite Zeitspanne und hält zumindest für diese zweite Zeitspanne die Luftklappen weiterhin geschlossen.

Bei einer Weiterbildung der Erfindung aktiviert die Steuereinheit bei geschlossen gehaltenen Luftklappen zum Fahrzeuginnenraum für eine vorgegebene dritte Zeitspanne das Gebläse der Klimaanlage, wenn innerhalb des Ablaufs der ersten Zeitspanne oder innerhalb des Ablaufs der zweiten Zeitspanne die Bedingung, bei der die Luftklappen zwischen Klimaanlage und Fahrgastinnenraum für längere Zeit geschlossen bleiben können, nicht mehr vorliegt. Diese Bedingung liegt beispielsweise nicht mehr vor, wenn die Steuereinheit Informationen erhält, die zumindest auf eine baldige Fahrzeuginbetriebnahme hinweisen, wie z. B. die Entriegelung der Fahrzeugtüren, die Besetzung des Fahrgastraumes mit einem Insassen, das Einschalten der Klemme R oder der Klemme 15, der Start der Brennkraftmaschine oder das Einschalten der Standlüft-, Standheiz-, Standklima- oder Restwärmefunktion.

Die Steuereinheit kann weiterhin derart ausgestaltet sein, dass der Ozonerzeuger im Sinne der Produktion einer vergleichsweise niedrigen Ozonmenge zum Insassenschutz (z. B. etwa 20 ppb, entspricht Riechgrenze) einschaltbar ist, wenn aufgrund entsprechender der Steuereinheit zur Verfügung gestellter Informationen auf das Vorliegen einer Bedingung geschlossen werden kann, bei der die Luftklappen zwischen Klimaanlage und Fahrgastinnenraum nicht geschlossen bleiben oder geschlossen werden können.

Somit wird durch die Erfindung im wesentlichen erreicht, dass eine wirksame Desinfektion bei Fahrzeugstillstand vorgenommen wird und eine Desinfektion im Fahrbetrieb auch unterbleiben kann.

Bei einer Desinfektion im Standbetrieb (d. h. ohne Insassen) kann mit deutlich erhöhten Dosen von Ozon gearbeitet werden. Der Regelungsaufwand und die Abstimmung der Regelung während des Fahrbetriebs entfallen bzw. werden deutlich vereinfacht.

## Patentansprüche

1. Vorrichtung mit einer elektronischen Steuereinheit und einem Ozonerzeuger zur Desinfektion der Bauteile, insbesondere des Verdampfers, einer Klimaanlage in Kraftfahrzeugen mittels des Ozonerzeugers, der in einer Klimaanlage anordenbar ist und der mittels der elektronischen Steuereinheit ansteuerbar ist, wobei die Steuereinheit derart ausgestaltet ist, dass der Ozonerzeuger zur Produktion einer vergleichsweise hohen Ozonmenge einschaltbar ist, wenn aufgrund entsprechender der Steuereinheit zur Verfügung gestellter Informationen auf das Vorliegen einer Bedingung geschlossen werden kann, bei der die Luftklappen zwischen Klimaanlage und Fahrgastinnenraum voraussichtlich für eine zur Desinfektion notwendige Zeit geschlossen bleiben oder geschlossen werden können, **dadurch gekennzeichnet, dass** eine Bedingung das Vorliegen eines zumindest wahrscheinlich unbesetzten Zustandes des Fahrgastraumes ist und dass die Steuereinheit derart ausgestaltet ist, dass es einen unbesetzten Zustand des Fahrgastraumes erkennt und dass die Steuereinheit die Produktion einer vergleichsweise hohen Ozonmenge bei geschlossenen Luftklappen für eine vorgegebene erste Zeitspanne veranlasst und dass das Steuergerät nach Ablauf der vorgegebenen ersten Zeitspanne die für den Abbau des Ozons erforderliche zweite Zeitspanne bestimmt und zumindest für diese zweite Zeitspanne die Luftklappen weiterhin geschlossen hält.

2. Vorrichtung nach Patentanspruch 1, **dadurch gekennzeichnet, dass** das Steuergerät bei geschlossen gehaltenen Luftklappen zum Fahrzeuginnenraum für eine vorgegebene dritte Zeitspanne das Gebläse der Klimaanlage aktiviert, wenn innerhalb des Ablaufs der ersten Zeitspanne oder innerhalb des Ablaufs der zweiten Zeitspanne die Bedingung, bei der die Luftklappen zwischen Klimaanlage und Fahrgastinnenraum für längere Zeit geschlossen bleiben oder geschlossen werden können, nicht mehr vorliegt.

3. Vorrichtung nach einem der vorangegangenen Patentansprüche, **dadurch gekennzeichnet, dass** die Steuereinheit auf einen zumindest wahrscheinlich unbesetzten Zustand des Fahrgastraumes schließt, wenn die Brennkraftmaschine und/oder die Radioklemme ausgeschaltet sind/ist.

4. Vorrichtung nach einem der vorangegangenen Patentansprüche, **dadurch gekennzeichnet, dass** die Steuereinheit auf einen zumindest wahrscheinlich unbesetzten Zustand des Fahrgastraumes schließt, wenn die Zentralverriegelung aktiviert ist.

5. Vorrichtung nach einem der vorangegangenen Patentansprüche, **dadurch gekennzeichnet, dass** die Steuereinheit auf einen zumindest wahrscheinlich unbesetzten Zustand des Fahrgastraumes schließt, wenn eine Sitzbelegungserkennungseinrichtung keinen Insassen erkennt.

6. Vorrichtung nach einem der vorangegangenen Patentansprüche, **dadurch gekennzeichnet, dass** eine Bedingung der abgeschaltete Zustand der Standlüft-, Standheiz-, Standklima- und Restwärmefunktion bei abgeschalteter Brennkraftmaschine ist.

7. Vorrichtung nach einem der vorangegangenen Patentansprüche, **dadurch gekennzeichnet, dass** eine Bedingung die Information für den Betrieb des Bordnetzes ist, dass elektrische Standverbraucher aktiviert werden können.

8. Vorrichtung nach einem der vorangegangenen Patentansprüche, **dadurch gekennzeichnet, dass** eine Bedingung die aktuelle Uhrzeit, insbesondere zwischen 1 und 6 Uhr nachts ist.

## Claims

1. A device with an electronic control unit and an ozone generator for disinfecting components, more especially the evaporator, of an air conditioning system in motor vehicles by means of the ozone generator, which can be arranged in the air conditioning system and which can be activated by means of the electronic control unit, the control unit being configured in such a way that the ozone generator can be switched on to produce a comparatively high ozone quantity if, on the basis of corresponding information provided to the control unit, the presence of a condition is indicated in which it is expected that the air flaps between the air conditioning system and passenger interior can remain closed or be closed for a period necessary for disinfection, **characterised in that** one condition is the presence of an at least probably unoccupied state of the passenger compartment and **in that** the control unit is configured in such a way that it recognises an unoccupied state of the passenger compartment and **in that** the control unit brings about the production of a comparatively high ozone quantity with the air flaps closed for a predetermined first time span and **in that** the control apparatus, after the predetermined first time span has passed, determines the second time span required to reduce the ozone and continues to keep the air flaps closed at least for this second time span.

2. A device according to claim 1, **characterised in that** with the air flaps kept closed to the vehicle interior, the control apparatus activates the blower of the air conditioning system for a predetermined third time span when, within the passage of the first time span or within the passage of the second time span, the condition, in which the air flaps between the air conditioning system and the passenger interior can remain closed for a relatively long time or can be closed, is no longer present.

3. A device according to any one of the preceding claims, **characterised in that** the control unit determines an at least probably unoccupied state of the passenger compartment if the internal combustion engine and/or the radio terminal are/is switched off.

4. A device according to any one of the preceding claims, **characterised in that** the control unit determines an at least probably unoccupied state of the passenger compartment if the central locking is activated.

5. A device according to any one of the preceding claims, **characterised in that** the control unit determines an at least probably unoccupied state of the passenger compartment if a seat occupancy detection device does not recognise any occupants.

6. A device according to any one of the preceding claims, **characterised in that** one condition is the switched-off state of the auxiliary ventilating, auxiliary heating, auxiliary air conditioning and residual heat function when the internal combustion engine is switched off.

7. A device according to any one of the preceding claims, **characterised in that** one condition is the information for operation of the electrical system that electrical auxiliary loads can be activated.

8. A device according to any one of the preceding claims, **characterised in that** one condition is the current time, more especially between 1 and 6 o'clock in the night.

## Revendications

1. Dispositif comportant une unité de commande électronique et un générateur d'ozone pour désinfecter des équipements, notamment l'évaporateur d'une installation de climatisation d'un véhicule automobile à l'aide du générateur d'ozone monté dans l'installation de climatisation et commandé par l'unité de commande électronique,
l'unité de commande étant réalisée pour que le générateur d'ozone puisse être activé pour produire une quantité d'ozone relativement élevée ainsi les informations fournies par l'unité de commande permettent de conclure qu'une condition est remplie pour laquelle les volets de ventilation entre l'installation de climatisation et l'habitacle restent fermés ou peuvent être fermés de manière prévisionnelle pendant le temps nécessaire à la désinfection,
**caractérisé en ce qu'**
une condition est au moins un état de l'habitacle, probablement non occupé,
l'unité de commande reconnaît l'état non occupé de l'habitacle,
l'unité de commande produit une quantité relativement élevée d'ozone lorsque les volets de ventilation sont fermés pendant une première durée prédéfinie, et
après la première durée prédéfinie, l'appareil de commande définit une seconde durée nécessaire à l'élimination de l'ozone, au moins pendant laquelle les volets d'aération continuent de rester fermés.

2. Dispositif selon la revendication 1,
**caractérisé en ce que**
lorsque les volets d'aération sont maintenus fermés, l'appareil de commande active en direction de l'habitacle, un ventilateur de l'installation de climatisation pendant une troisième durée prédéfinie si pendant la première durée ou pendant la seconde durée, la condition n'existe plus selon laquelle les volets de ventilation entre l'installation de climatisation et l'habitacle, sont ou peuvent être fermés pendant une durée prolongée.

3. Dispositif selon l'une quelconque des revendications précédentes, **caractérisé en ce que**
l'unité de commande conclut à un état au moins probable de non occupation de l'habitacle du véhicule si le moteur à combustion et/ou la radio sont coupés.

4. Dispositif selon l'une quelconque des revendications précédentes, **caractérisé en ce que**
l'unité de commande conclut à un état au moins probable de non occupation de l'habitacle si le verrouillage centralisé est activé.

5. Dispositif selon l'une quelconque des revendications précédentes, **caractérisé en ce que**
l'unité de commande conclut à un état au moins probable de non occupation de l'habitacle si une installation de détection de l'occupation des sièges ne décèle aucun occupant.

6. Dispositif selon l'une quelconque des revendications précédentes, **caractérisé en ce qu'**
une condition est l'état arrêté de l'installation de ventilation, de l'installation de chauffage, de l'installation de climatisation et de la fonction de chaleur résiduelle lorsque le moteur à combustion est coupé.

7. Dispositif selon l'une quelconque des revendications précédentes, **caractérisé en ce qu'**
une condition est l'information concernant le fonctionnement du réseau embarqué est que les consommateurs électriques permanents puissent être activés.

8. Dispositif selon l'une quelconque des revendications précédentes, **caractérisé en ce qu'**
une condition est l'heure actuelle, notamment entre 1 heure et 6 heures la nuit.
